(19) Europäisches Patentamt
European Patent Office
Office européen des brevets

(11) Publication number: 0 544 233 A1

(12) # EUROPEAN PATENT APPLICATION

(21) Application number: 92119993.1

(22) Date of filing: 24.11.92

(51) Int. Cl.5: C08F 214/18, C08F 216/02, C08F 216/14, C08F 230/08

(30) Priority: 28.11.91 JP 314779/91

(43) Date of publication of application: 02.06.93 Bulletin 93/22

(84) Designated Contracting States: DE FR GB IT

(71) Applicant: CENTRAL GLASS COMPANY, LIMITED
5253, Oaza Okiube
Ube-city Yamaguchi-pref.(JP)

(72) Inventor: Maruyama, Yutaka
No. 3-8-7, Kamifuoka
Kamifukuoka City, Saitama Prefecture(JP)
Inventor: Okinaka, Hidenari
No. 1-6-8, Minamidai
Kamifukuoka City, Saitama Prefecture(JP)

(74) Representative: Dipl.-Phys.Dr. Manitz
Dipl.-Ing., Dipl.-W.-Ing. Finsterwald Dipl.-Ing.
Grämkow Dipl.-Chem.Dr. Heyn Dipl.-Phys.
Rotermund
Morgan, B.Sc.(Phys.) Robert-Koch-Strasse 1
W-8000 München 22 (DE)

(54) **Fluorine-containing copolymer useful as paint vehicle.**

(57) The invention provides a copolymer suitable for use as a paint vehicle, which includes, as essential components, 10 to 80 mol% of a fluoroolefin, 0 to 80 mol% of a hydroxyl-containing polymerizable unsaturated monomer, 3 to 80 mol % of an allyloxy group-containing compound, and 2 to 70 mol% of an organosilicon compound having a polymerizable unsaturated bond and a group hydrolyzable to a hydroxyl. The copolymer is soluble in various organic solvents and sufficiently low in molecular weight so as to substantially reduce the amount of solvent. The cured copolymer is excellent in weatherability, water resistance, chemical resistance and abrasion resistance.

EP 0 544 233 A1

## BACKGROUND OF THE INVENTION

### 1. Field of the Invention

The present invention relates to a fluorine-containing copolymer which is soluble in various organic solvents, curable at relatively low temperatures and suitable for use as a paint vehicle.

### 2. Description of the Prior Art

Fluororesins are generally excellent in chemical resistance, weather resistance and heat resistance. Accordingly paints using fluororesins such as a tetrafluoroethylene polymer, a chlorotrifluoroethylene polymer and a copolymer containing vinylidene fluoride have been developed for application to, for example, chemical plants, buildings and other constructions, machinery and food containers. Recently, as is disclosed in, for example, USP 3,429,845, JP-A-59-219372 and JP-A-61-275311, much attention has been directed to solvent-thinned paints using a fluororesin which is soluble in organic solvents and curable at relatively low temperatures. Fluororesin paints of this type are comparable to paints using other conventional resins in the ease of application and provide paint films superior in chemical resistance and weather resistance. However, upon coating, it is necessary to mix the solvent-thinned paint with a curing agent such as melamine or urethane. This mixing process increases the production cost. Furthermore, melamine and urethane tend to deteriorate the superior chemical and weather resistances of a fluororesin itself.

In view of this, for example, JP-A-2-228352 and JP-A-3-35011 have proposed fluorine-containing copolymers which include an organosilicon monomer having a group hydrolyzable to a hydroxyl. It should be noted that there is no need to mix the copolymer of this type with a curing agent due to the formation of siloxane bond.

Recently, from a viewpoint of environmental protection, there is a need to reduce molecular weight of a copolymer as a paint vehicle as much as possible so as to produce a so-called high-solid type paint which needs only a small amount of solvent upon coating. However, it is difficult to greatly lower molecular weight of the above-mentioned copolymer, and to control degree of polymerization of the same.

## SUMMARY OF THE INVENTION

It is therefore an object of the present invention to provide a fluorine-containing copolymer which is soluble in organic solvents, curable at relatively low temperatures, and has a low molecular weight.

According to the present invention, there is provided a copolymer comprising, as essential components:

10 to 80 mol% of a fluoroolefin;

0 to 80 mol% of a hydroxyl-containing polymerizable unsaturated monomer;

3 to 80 mol% of an allyloxy group-containing compound represented by the formula (1),

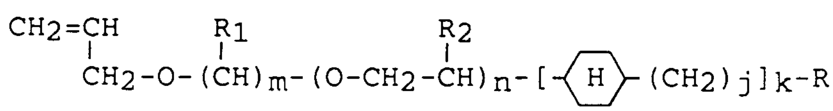

(1)

wherein R is H or $CH_2OH$, each of $R_1$ and $R_2$ is H, OH, $CH_3$ or fluoroalkyl group, and each of m, n, j and k is an integer from 0 to 12; and

2 to 70 mol% of an organosilicon compound having a polymerizable unsaturated bond and a group hydrolyzable to a hydroxyl,

the copolymer having a number average molecular weight in the range from 3000 to 15000, through the measurement by gel permeation chromatography method.

With the above-mentioned composition of the copolymer and the above-mentioned range of the number average molecular weight, the copolymer of the present invention is soluble in various organic solvents, curable at relatively low temperatures and thus suitable for use as a paint vehicle.

In the gel permeation chromatography method, tetrahydrofuran is used as solvent, and polystyrene having a known molecular weight is used as a standard substance.

## DESCRIPTION OF THE PREFERRED EMBODIMENTS

Good examples of fluoroolefins useful in the present invention are tetrafluoroethylene, chlorotrifluoroethylene, 1,1-difluoroethylene, hexafluoropropylene. One of these fluoroolefins or a combination of two or more of these fluoroolefins can be used in the present invention.

If the amount of a fluoroolefin is too large, a copolymer according to the present invention becomes low in solubilities in organic solvents, and it becomes difficult to prepare the copolymer at good yield. If the amount of the fluoroolefin is too small, the copolymer becomes insufficient in chemical resistance and weather resistance.

Examples of hydroxyl-containing polymerizable unsaturated monomer useful in the present invention are hydroxyalkyl vinyl ethers, hydroxyalkylallyl ethers, allyl alcohols and hydroxyalkyl(meta)acrylates.

In the present invention, examples of the hydroxyalkyl vinyl ethers are hydroxymethyl vinyl ether, hydroxyethyl vinyl ether, 4-hydroxybutyl vinyl ether, 5-hydroxypentyl vinyl ether, 6-hydroxyhexyl vinyl ether.

In the present invention, examples of the hydroxyalkylallyl ethers are 2-allyloxy-1-ethanol, 3-allyloxy-1-propanol,4-allyloxy-1-butanol, 5-allyloxy-1-heptanol, 6-allyloxy-1-hexanol, 3-allyloxypropane-1,2-diol, diethyleneglycolmonoallyl ether, triethyleneglycolmonoallyl ether and cyclohexanedimethanolallyl ether.

In the present invention, examples of the hydroxyalkyl(meta)acrylates are hydroxymethyl(meta)acrylate, hydroxyethyl(meta)acrylate, hydroxypropyl(meta)acrylate, hydroxybutyl(meta)acrylate, N-methylolacrylamide, cyclohexanedimethanol(meta)acrylate.

It should be noted that the use of an allyloxy group-containing compound is very important to control the degree of polymerization and molecular weight of the copolymer. That is, by the increase of the amount of an allyloxy group-containing compound, molecular weight of the copolymer is lowered. On the contrary, by the decrease of the same, it is increased. If an allyloxy group-containing compound is omitted in polymerization, the degree of polymerization tends to become too large, thereby lowering stability of a resin varnish containing the copolymer. It is supposed that radicals become highly stable due to allylic resonance of an allyloxy group-containing compound. This causes termination reaction, thereby controlling the degree of polymerization.

Furthermore, it should be noted that solubility of the copolymer in an organic solvent can be controlled by the amount of an allyloxy group-containing compound. That is, the copolymer becomes more soluble by increasing the allyloxy group-containing compound content of the copolymer. On the contrary, the copolymer becomes less soluble by decreasing the allyloxy group-containing compound content.

Examples of allyloxy group-containing compound to be used in the present invention are fatty acid alkylallyl ethers such as ethylallyl ether and butylallyl ether, fluorine-containing alkylallyl ethers such as trifluoroethylallyl ether, tridecafluorooctylallyl ether, hexafluoroisopropylallyl ether, hydroxyl- and allyloxy group-containing compounds such as allyl alcohol, 2-allyloxy-1-ethanol, 3-allyloxy-1-propanol, 4-allyloxy-1-butanol, 5-allyloxy-1-heptanol, 6-allyloxy-1-hexanol, 3-allyloxypropane-1,2-diol, diethyleneglycolmonoallyl ether, triethyleneglycolmonoallyl ether and cyclohexanedimethanolallyl ether, allylglycidyl ether, cyclohexylallyl ether, and benzylallyl ether.

It is clear that a hydroxyl-containing polymerizable unsaturated monomer can be omitted as long as a hydroxyl-and allyloxy group-containing compound is used in the copolymerization.

In the present invention, an organosilicon compound having an olefinic unsaturated bond and a group hydrolyzable to a hydroxyl is used. For example, the organosilicon compound is represented by the formulas (2), (3), (4) and (5):

$R^1R^2SiY^1Y^2$ (2)

$R^1XSiY^1Y^2$ (3)

$R^1SiY^1Y^2Y^3$ (4)

$R^1XX^1SiY^1$ (5)

wherein each of R1 and R2 is a group having an olefinic unsaturated bond, and comprising carbon, hydrogen and optionally oxygen atoms, each of X and X1 is an organic group not having an olefinic unsaturated bond, and each of Y1, Y2 and Y3 is a hydrolyzable group.

Preferred examples of groups represented by R1 and R2 are vinyl, allyl, butenyl, cyclohexenyl and cyclopentadienyl groups, and more preferred examples are end olefinic unsaturated groups. Still further examples are groups each having an ester bond of an end unsaturated acid, for example, represented by

the formulas $CH_2=CH\text{-}COO\text{-}(CH_2)_3\text{-}$, $CH_2=C(CH_3)COO(CH_2)_3\text{-}$, $CH_2=C(CH_3)COO(CH_2)_2\text{-}O\text{-}(CH_2)_3\text{-}$ and $CH_2=C(CH_3)COOCH_2CH_2OCH_2CHOHCH_2O(CH_2)_3$.

Examples of groups represented by X and $X^1$ are monovalent hydrocarbon groups such as methyl, ethyl, propyl, tetradecyl, octadecyl, phenyl, benzyl and tolyl groups. These groups may be halogen-substituted ones.

Examples of groups represented by $Y^1$, $Y^2$ and $Y^3$ are alkoxy groups such as methoxy, ethoxy, butoxy and methoxyethoxy groups, alkoxyalkoxy groups, acyloxyl groups such as formyloxy, acetoxy and propionyloxy groups, oximes represented by, for example, the formulas $\text{-}ON=C(CH_3)_2$, $\text{-}ON=CHCH_2C_2H_5$ and $\text{-}ON=C(C_6H_5)_2$, substituted amino groups and allylamino groups, represented by, for example, the formulas $\text{-}NHCH_3$, $\text{-}NHC_2H_5$ and $\text{-}NH(C_6H_5)$, and other organic groups hydrolyzable to hydroxyls.

Examples of the organosilicon compound useful in the present invention are 3-methacryloxypropyltrimethoxysilane, vinyltrimethoxysilane, vinyltriethoxysilane, vinyltris(methoxyethoxy)silane, vinylmethyldiethoxysilane, vinylphenyldimethoxysilane, vinylacetoxysilane, 3-methacryloxypropylmethyldimethoxysilane, 3-methacryloxypropyldimethylmethoxysilane, methacryloxymethyltrimethoxysilane, vinyldimethylmethoxysilane and vinylmethyldimethoxysilane.

Besides the above described essential components, another monomer or some other monomers may optionally be incorporated in the copolymer according to the present invention on condition that the optional comonomer(s) does not occupy more than 80 mol% of the copolymer. Examples of the optional comonomer(s) are alkylvinyl ethers such as ethyl vinyl ether, butyl vinyl ether, isobutylvinyl ether, fatty acid vinyl esters such as vinyl acetate, vinyl propionate, vinyl butyrate, vinyl isobutyrate, vinyl pivalate, vinyl caprylate, vinyl caprate, vinyl caproate, vinyl stearate, VEOVA-9 and VEOVA-10 which are trade names of Showa-Shell Chem. Co., $\alpha$-olefins such as ethylene, propylane and isobutylane, acrylic esters such as ethylacrylate, methacrylic esters such as methylmethacrylate and glycidylmethacrylate, acrylamides such as acrylamide and N-methylolacrylamide, unsaturated carboxylic acids such as vinylacetic acid, crotonic acid and undecylenic acid.

As to the purities of the above-mentioned monomers for use in the present invention, gas chromatography purity of 98% or above is sufficient so long as impurities obstructive to usual radical polymerization reaction are not contained.

A copolymer according to the present invention is obtained by copolymerizing the essential four kinds of monomers, and optional monomer(s) if used, in the presence of a commonly used radical polymerization initiator. The copolymerization is carried out, for example, by solution polymerization or block polymerization. Solvents are not particularly limited in the present invention. According to the manner of polymerization, a usual organic hydrocarbon and/or a fluorine-containing organic compound may be used. However, it is most preferable to carry out copolymerization by solution polymerization with using, as a solvent, a lower alkyl-substituted benzene such as toluene, xylene, ethylbenzene or SOLVESSO #100 which is a trade name of Exxon Chem. Co.

The copolymerization reaction can be carried out at temperatures ranging from about -30°C to about 100°C, more preferably from about 0°C to about 80°C.

A suitable radical polymerization initiator can be selected from oil-soluble initiators including organic peroxides such as di-isopropyl peroxydicarbonate, di-n-propyl peroxydicarbonate, t-butyl peroxypivalate, di-2-ethylhexyl peroxydicarbonate, benzoyl peroxide, lauroyl peroxide and perfluorooctanoyl peroxide, azo compounds such as azoisobutyronitrile and azobis-2,4-dimethylvaleronitrile, and organic boron initiators such as a combination of triethylboron and oxygen and a combination of trietylboron and peroxide.

The copolymerization reaction can be efficiently carried out by removing chloride ions and/or fluoride ions originating from fluoroolefins. To remove the halide ions, an alkali metal or alkali earth metal compound, or a hydrate of the same can be added in the copolymerization reaction. Examples of the alkali metal compounds are sodium carbonate, potassium carbonate, and sodium bicarbonate. Examples of the alkali earth metal compounds are magnesium carbonate, calcium carbonate, barium carbonate, strontium carbonate, magnesium oxide, calcium oxide, barium oxide and strontium oxide. The amount of the above compound to remove the halide ions is preferably from 0.05 to 10.0 wt% of the total amount of the monomers to be charged. If the amount of the compound is too large, the copolymer may be colored. If the amount of the compound is too small, the removal of the halide ions becomes insufficient.

It should be noted that a copolymer according to the present invention can be cured without using a curing agent, due to the formation of siloxane bond.

The curing reaction will speed up by the addition of a catalyst such as a small amount of, for example, water, an acid, a metallic complex such as an organotin compound, and an aluminum chelate compound. Thus, by usual coating and curing operations, the copolymer gives a paint film which is high in transparency, sufficiently hard and high in resistance to abrasion and scratches and excellent in durability.

Optional additives such as, for example, a pigment, an ultraviolet absorbing agent and a dispersion stabilizing agent may be added to a solution containing the copolymer.

A paint containing a copolymer according to the present invention can be used for various kinds of coats such as under coat, intermediate coat, top coat containing for example, a pigment and a metal, and top clear coat.

Various coating methods can be taken, such as spray coating, dip coating, coating with a roller and coating with a brush. After the coating, the paint can be cured at a temperature ranging from room temperature to several hundreds degrees Centigrade.

It is optional to mix a copolymer according to the present invention with another polymer such as acrylic resin, polyester resin and epoxy resin.

A paint containing a copolymer according to the present invention is superior in chemical resistance, weather resistance, abrasion resistance, water and oil repellency. Therefore, the paint can be used in various fields, and applied to various materials such as wood, metals, plastics, inorganic materials such as cement and concrete, and protective layers such as lithin and mastic.

The following examples are illustrative of the present invention, but these examples are not limitative.

Example 1

A 3-liter stainless steel autoclave provided with an electromagnetic stirrer was charged with 226.6 g of vinyl butyrate (VBu), 138.7 g of hydroxybutyl vinyl ether (HBVE), 81.3 g of 2-allyloxy-1-ethanol (2AlE), 59.4 g of vinyltrimethoxysilane (VTMS), 650 g of xylene, 32.5 g of barium carbonate and 8.3 g of t-butyl peroxypivalate (see Table 1). The gas atmosphere in the autoclave was replaced by nitrogen gas, and this operation was repeated three times. Then, the autoclave was cooled by liquid nitrogen, and nitrogen gas was purged from the autoclave. After that, 578.9 g of chlorotrifluoroethylene (CTFE) was introduced into the autoclave. The proportions of the charged monomers were 53.2 mol% of CTFE, 21.3 mol% of VBu, 12.7 mol% of HBVE, 8.5 mol% of 2AlE and 4.3 mol% of VTMS. The temperature in the autoclave was gradually raised up to 55 °C in water bath, and at this temperature polymerization reaction was carried out for 24 hr. After the reaction, unreacted CTFE was discharged from the autoclave, and the reaction liquid was taken out of the autoclave. The liquid was a solution of a CTFE/VBu/HBVE/2AlE/VTMS copolymer. As is shown in Table 2, the concentration of the copolymer in the solution was 55 wt%.

The above solution was poured into n-hexane to precipitate the copolymer, which weighed 824.5 g after drying. By analysis, as is shown in Table 2, the obtained copolymer was composed of 49.1 mol% of CTFE, 27.9 mol% of VBu, 13.3 mol% of HBVE, 5.9 mol% of 2AlE and 3.8 mol% of VTMS. The copolymer was subjected to analysis of chemical composition, molecular weight (number average molecular weight, $M_n$) and OH value. Their results are shown in Table 2.

In the following examples, the copolymerization process of Example 1 was repeated with selective changes in the kind and quantity of monomers other than CTFE. The amounts of the charged monomers are shown in Table 1. In every example, a colorless and clear solution of a copolymer was obtained. The obtained copolymers were analyzed by the same methods. The results are shown in Table 2.

EXAMPLE 2

In place of VBu, V-10 and vinyl pivalate (VPv) were used, and in place of 2AlE, allylethyl ether (AEE) was used.

EXAMPLE 3

In place of VBu, V-10 and propylene (Pr) were used.

EXAMPLE 4

In place of VBu, V-10 and Pr were used, and in place of VTMS, $\gamma$-methacryloxypropyltrimethoxysilane ($\gamma$-MPTMS) was used.

EXAMPLE 5

In place of VBu, Pr and ethyl vinyl ether (EVE) were used, and in place of VTMS, $\gamma$-MPTMS was used.

EXAMPLE 6

In place of VBu, VPv and EVE were used, and HBVE was omitted.

EXAMPLE 7

In addition to 2AlE, AGE was used.

EXAMPLE 8

In place of 2AlE, 4-allyloxy-1-butanol was used.

COMPARATIVE EXAMPLE 1

The copolymerization process of Example 1 was modified only in that the allyloxy group containing compound was omitted, and in addition to VBu, VPv was used. A colorless and clear solution of a copolymer was obtained.

COMPARATIVE EXAMPLE 2

The copolymerization process of Example 1 was modified only in that the allyloxy group containing compound was omitted, and in place of VBu, Pr and EVE were used. The obtained solution was gelatinized.

TABLE 1

| | Ex. 1 | Ex. 2 | Ex. 3 | Ex. 4 | Ex. 5 | Ex. 6 | Ex. 7 | Ex. 8 | Comp. Ex. 1 | Comp. Ex. 2 |
|---|---|---|---|---|---|---|---|---|---|---|
| Charged monomers (g) | | | | | | | | | | |
| CTFE | 578.9 | 578.9 | 578.9 | 559.1 | 559.1 | 559.1 | 559.1 | 560.3 | 578.9 | 559.1 |
| VBu | 226.6 | - | - | - | - | - | 226.6 | 330.8 | 113.3 | - |
| V-10 | - | 197.3 | 118.4 | 118.4 | - | - | - | - | - | - |
| VPv | - | 127.5 | - | - | - | 127.5 | - | - | 127.5 | - |
| Pr | - | - | 58.6 | 58.6 | 41.9 | - | - | - | - | 41.9 |
| EVE | - | - | - | - | 71.7 | 71.7 | - | - | - | 71.7 |
| HBVE | 138.7 | 162.0 | 138.7 | 138.7 | 138.7 | - | - | - | 231.5 | 231.5 |
| AEE | - | 51.3 | - | - | - | - | - | - | - | - |
| 2AlE | 81.3 | - | 81.3 | 81.3 | 81.3 | 202.8 | 202.8 | - | - | - |
| 4AlB | - | - | - | - | - | - | - | 236.9 | - | - |
| AGE | - | - | - | - | - | - | 23.8 | - | - | - |
| VTMS | 59.4 | 59.4 | 59.4 | - | - | 61.9 | 30.9 | 43.7 | 59.4 | - |
| γ-MPTMS | - | - | - | 103.7 | 103.7 | - | - | - | - | 103.7 |
| $BaCO_3$ | 32.5 | 35.0 | 31.0 | 32.0 | 30.0 | 31.0 | 31.0 | 38.2 | 33.0 | 30.0 |
| xylene | 650 | 710 | 620 | 640 | 600 | 610 | 630 | 760 | 670 | 605 |

TABLE 2

| | Ex. 1 | Ex. 2 | Ex. 3 | Ex. 4 | Ex. 5 | Ex. 6 | Ex. 7 | Ex. 8 | Comp. Ex. 1 |
|---|---|---|---|---|---|---|---|---|---|
| Copolymer Composition (mol%) | | | | | | | | | |
| CTFE | 49.1 | 49.6 | 49.5 | 49.2 | 49.0 | 49.1 | 49.0 | 49.0 | 51.0 |
| VBu | 27.9 | - | - | - | - | - | 27.1 | 29.5 | 14.0 |
| V-10 | - | 14.0 | 11.2 | 11.0 | - | - | - | - | - |
| VPv | - | 13.9 | - | - | - | 13.7 | - | - | 13.9 |
| Pr | - | - | 16.7 | 16.8 | 13.7 | - | - | - | - |
| EVE | - | - | - | - | 14.3 | 14.2 | - | - | - |
| HBVE | 13.3 | 15.4 | 13.0 | 13.1 | 12.8 | - | - | - | 19.1 |
| AEE | - | 3.8 | - | - | - | - | - | - | - |
| 2AIE | 5.9 | - | 6.1 | 6.3 | 7.1 | 19.0 | 19.2 | - | - |
| 4AIB | - | - | - | - | - | - | - | 18.5 | - |
| AGE | - | - | - | - | - | - | 2.4 | - | - |
| VTMS | 3.8 | 3.3 | 3.5 | - | - | 4.0 | 2.3 | 3.0 | 2.0 |
| γ-MPTMS | - | - | - | 3.6 | 3.1 | - | - | - | - |
| Copolymer Conc. (wt%) | 55 | 60 | 59 | 61 | 60 | 54 | 56 | 55 | 62 |
| Fluorine Cont. (wt%) | 26.8 | 24.8 | 26.9 | 26.0 | 29.9 | 27.3 | 26.5 | 29.6 | 26.6 |
| Molecular Weight, $M_n$ | 5000 | 5300 | 4900 | 4700 | 4500 | 4100 | 4000 | 4000 | 9700 |
| OH Value (mg KOH/g) | 80 | 85 | 81 | 85 | 90 | 91 | 88 | 104 | 80 |

EVALUATION TESTS

Each of the copolymers prepared in the foregoing Examples and Comparative Example 1 was dissolved in xylene to obtain a 50 wt% solution, and 2.5 parts by weight of dibutyl tin laurate and 1 part by weight of a so-called light stabilizer, SANOL LS765 which is a trade name of Sankyo Co., were added to 100 parts by

weight of the copolymer solution. After that the viscosity of each solution was adjusted by adding a solvent, SOLVESSO 100 which is a trade name of Exxon Chem. Co. Then each solution was applied by spraying to a galvanized iron sheet which had been coated with epoxy primer. The coating film was cured at room temperature for 2 weeks. In every case a transparent film was formed with good adhesion to the iron sheet.

The cured coating films of Examples 1-8 and Comparative Example 1 were subjected to measurements of the characteristics shown in Table 3.

The adhesion strength was tested by the cross-cut adhesion test according to JIS K 5400, and the result is indicated by the number of no peel areas among 100 areas tested with cellophane tape.

The transmittance was measured on films having a thickness of 40 μm for wavelengths ranging from 360 to 800 nm.

The specular gloss (incident angle 60°) was measured by the method according to JIS K 5400.

The hardness was tested by the pencil scratching test according to JIS K 5400, and the result is indicated by the maximum hardness of pencil that failed to give scratches.

Acid resistance was tested by immersing the samples in 60% sulfuric acid at 20°C for 24 hr.

Water resistance was tested by immersing the samples in boiling water for 3 hr.

The smoothness of surface was judged by observing the paint film surface with the naked eye. In Table 3 "A" means an evenly and sufficiently smooth film surface; "B" means a nearly smooth film surface; and "C" means a film surface having orange peel somewhat.

With respect to the tests of acid resistance, water resistance and the smoothness of surface, "A" in Table 3 means that no change in the surface state of the tested film was perceptible by observation with the naked eye, "B" means that a slight change was perceptible, and "C" means that some change was perceptible.

Weatherability was tested by accelerated testing with a sunshine weathermeter for 4000 hr, and the surface gloss of each sample film was measured before and after the weathering test to indicate the degree of weatherability by percentage of the retained gloss.

TABLE 3

| | Ex. 1 | Ex. 2 | Ex. 3 | Ex. 4 | Ex. 5 | Ex. 6 | Ex. 7 | Ex. 8 | Comp. Ex. 1 |
|---|---|---|---|---|---|---|---|---|---|
| Adhesion (no peel areas) | 100/100 | 100/100 | 100/100 | 100/100 | 100/100 | 100/100 | 100/100 | 100/100 | 100/100 |
| Transmittance (%) | >90 | >90 | >90 | >90 | >90 | >90 | >90 | >90 | >90 |
| Specular Gloss (%) | 98 | 98 | 96 | 95 | 94 | 96 | 94 | 94 | 95 |
| Pencil Hardness | HB | H | F | H | F | H | HB | HB | H |
| Acid Resistance | A | A | A | A | A | A | A | A | B |
| Water Resistance | A | A | A | A | A | A | A | A | A |
| Smoothness | A | A | A | A | A | A | A | A | C |
| Weatherability (gloss (%) retained after accelerated test) | 90 | 94 | 93 | 90 | 91 | 96 | 95 | 98 | 94 |

## Claims

**1.** A copolymer comprising, as essential components:
10 to 80 mol% of a fluoroolefin;

0 to 80 mol% of a hydroxyl-containing polymerizable unsaturated monomer;
3 to 80 mol% of an allyloxy group-containing compound represented by the formula (1),

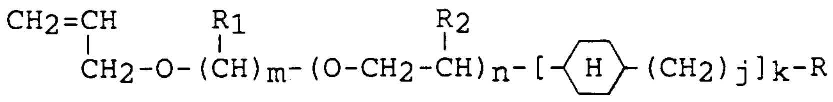 (1)

wherein R is H or $CH_2OH$, each of $R_1$ and $R_2$ is H, OH, $CH_3$ or fluoroalkyl group, and each of m, n, j and k is an integer from 0 to 12; and

2 to 70 mol% of an organosilicon compound having a polymerizable unsaturated bond and a group hydrolyzable to a hydroxyl,

the copolymer having a number average molecular weight in the range from 3000 to 15000, through the measurement by gel permeation chromatography method.

**2.** A copolymer according to Claim 1, wherein said first, second, third and fourth repeating units amount to 20-70 mol%, 0-60 mol%, 3-60 mol% and 5-60 mol%, respectively.

**3.** A copolymer according to Claim 1, further comprising up to 80 mol% of auxiliary repeating units which originate from at least one monomer selected from alkyl vinyl ethers, fatty acid vinyl esters, $\alpha$-olefins, acrylic esters, methacrylic esters, acrylamides and unsaturated carboxylic acids.

**4.** A copolymer according to Claim 3, wherein the amount of said auxiliary repeating units is from 3 to 70 mol%.

**5.** A copolymer according to Claim 1, wherein said fluoroolefin is selected from the group consisting of tetrafluoroethylene, chlorotrifluoroethylene, 1,1-difluoroethylene and hexafluoropropylene.

**6.** A copolymer according to Claim 1, wherein said hydroxyl-containing polymerizable unsaturated monomer is selected from the group consisting of hydroxyalkyl vinyl ethers, hydroxyalkylallyl ethers, allyl alcohols and hydroxyalkyl(meta)acrylates.

**7.** A copolymer according to Claim 1, wherein said allyloxy group-containing compound is selected from the group consisting of fatty acid alkylallyl ethers, fluorine-containing alkylallyl ethers, hydroxyl- and allyloxy group-containing compounds, allylglycidyl ether, cyclohexylallyl ether and benzylallyl ether.

**8.** A copolymer according to Claim 1, wherein said organosilicon compound is selected from the group consisting of 3-methacryloxypropyltrimethoxysilane, vinyltrimethoxysilane, vinyltriethoxysilane, vinyltris-(methoxyethoxy)silane, vinylmethyldiethoxysilane, vinylphenyldimethoxysilane, vinylacetoxysilane, 3-methacryloxypropylmethyldimethoxysilane, 3-methacryloxypropyldimethylmethoxysilane, methacryloxymethyltrimethoxysilane, vinyldimethylmethoxysilane and vinylmethyldimethoxysilane.

European Patent Office

# EUROPEAN SEARCH REPORT

Application Number

EP 92 11 9993

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 514 425 (E.H. ENGELHARDT)<br>* the whole document *<br>--- | 1 | C08F214/18<br>C08F216/02<br>C08F216/14<br>C08F230/08 |
| Y | US-A-3 781 251 (M.E.HERMES)<br>* the whole document *<br>--- | 1 | |
| Y | EP-A-0 185 526 (MITSUI SEYIKU K.K.K.K.)<br>* claim 1; example 1 *<br>----- | 1 | |
| | | | TECHNICAL FIELDS SEARCHED (Int. Cl.5) |
| | | | C08F |

The present search report has been drawn up for all claims

| Place of search | Date of completion of the search | Examiner |
|---|---|---|
| THE HAGUE | 09 FEBRUARY 1993 | GLIKMAN J.F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)